# EUROPEAN PATENT APPLICATION

(11) **EP 3 800 715 A1**
(43) Date of publication of application: **07.04.2021**
(21) Application number: 19201452.0
(22) Date of filing: 04.10.2019
(51) Int. Cl.: H01M 8/0213, H01M 8/0221, H01M 8/0226, B29C 43/00, B29C 43/02, H01M 8/0254, H01M 8/1018

(54) **CARBONACEOUS FLOW FIELD PLATE FOR FUEL CELLS AND METHOD FOR MAKING**

(71) Applicant: AVL List GmbH, 8020 Graz (AT); AVL Fuel Cell Canada Inc., Burnaby, British Columbia V5A4N8 (CA)
(72) Inventor: Gallagher, Emerson, Vancouver, British Columbia V6L2T5 (CA)
(74) Representative: Gamper, Bettina

(57) **Abstract**

The present invention relates to a carbonaceous flow field plate (1) for a fuel cell, the flow field plate (1) comprising an active region (1a) comprising flow field channels (3) and an inactive region (1b), wherein the active region (1a) of the plate comprises a first mixture of a first carbon particulate and a first polymer resin, and wherein the inactive region (1b) comprises a second mixture of a second carbon particulate and a second polymer resin, wherein the first mixture is different from the second mixture.

Further the invention relates to methods of manufacturing such a carbonaceous flow field plate (1).

## Description

This invention relates to carbonaceous flow field plates with improved overall properties for fuel cells and particularly for solid polymer electrolyte fuel cells.

Fuel cells such as solid polymer electrolyte membrane fuel cells electrochemically convert fuel and oxidant reactants, such as hydrogen and oxygen or air, to generate electric power. Solid polymer electrolyte fuel cells generally employ a proton conducting, solid polymer membrane electrolyte between cathode and anode electrodes. The electrodes typically comprise appropriate catalysts to promote the electrochemical reactions taking place at each electrode. A structure comprising a solid polymer membrane electrolyte sandwiched between these two electrodes is known as a membrane electrode assembly (MEA). In one common embodiment, the MEA comprises a catalyst coated membrane (CCM) and gas diffusion layers (GDLs) applied on each side of the CCM. In the CCM, appropriate catalyst compositions have been applied and bonded to either side of the membrane electrolyte. The GDLs are provided to improve both the distribution of the fluid reactants to the electrodes and the removal of fluid by-products from the electrodes.

In addition, in a typical fuel cell, flow field plates comprising numerous fluid distribution channels for the reactants are provided on either side of a MEA to distribute fuel and oxidant to the respective electrodes and to remove reaction by-products from the fuel cell. Water is the primary by-product in a cell operating on hydrogen and air reactants. Because the output voltage of a single cell is of order of 1V, a plurality of cells is usually stacked together in series for commercial applications in order to provide a higher output voltage. Fuel cell stacks can be further connected in arrays of interconnected stacks in series and/or parallel for use in automotive applications and the like.

In addition to distributing reactant fluids and removing by-product fluids, flow field plates must also serve several other important functions. For instance, the electrical current generated in fuel cell stacks must pass through these plates. Thus, the electrical conductivity of such plates is preferably very high. Further, the surfaces of the plates typically serve as the sealing surfaces for the numerous fluid seals required in typical fuel cell stacks. Thus, the mechanical properties of such plates are preferably highly suitable for effecting seals thereto. Further still, the plates must be highly resistant to the corrosive conditions which typically exist within such fuel cell stacks. These characteristics are all desirably obtained in the thinnest embodiments possible in order to minimize the weight and volume of product fuel cell stacks. And of course, all the preceding characteristics are obtained in the most economical manner possible.

There are thus many restrictions as to what types of materials might be considered for use in flow field plate construction. Generally, two options currently are known for use as plate materials in state-of-the-art fuel cell stacks. One option involves using metals of special and/or complex composition, often with special coatings applied, in order to protect against corrosion. In such metallic plates, the flow field, sealing and other features are usually stamped into them. The other option involves using carbon based or carbonaceous materials. Such carbonaceous plates provide desirable corrosion resistance and electrical conductivity. In such carbonaceous plates, the desirable flow field and other required features are typically created either by embossing appropriate carbonaceous sheet (e.g. polymer impregnated expanded graphite) or by compression molding the features concurrently with the rest of the plate using moldable mixtures of carbonaceous material and polymer resin binder in appropriately patterned molds.

Both embossed and compression molded carbonaceous fuel cell plates are typically uniform in composition. In the latter, a bulk moldable mixture is made by mixing suitable carbon and/or graphite particulate with epoxy or vinyl ester resins. The mixture is then distributed into a heated molding system. The mixture can be loaded into the system via a preform or via distribution over the surface of a distribution tool. The carbon and/or graphite particulates provide the desired electrical conductivity and other properties and generally make up 75% to 90% of the mass of the flow field plate. However, the high percentage of carbon present can also undesirably limit flow of the mixture during the forming or molding process.

The mixing process employed in preparing the carbon and polymer resin mixture is known to be important. With too little mixing (e.g. mixing energy applied), and the resultant flow field plate produced can be undesirably porous or have undesirably variable mechanical properties. On the other hand, with too much mixing (e.g. mixing energy applied), the electrical conductivity between the carbon and graphite particles in the mixture gets disrupted. As it happens, the requirements for high carbon content in the plates and low mixing energies in preparing molding mixtures often result in limitations for the minimum thickness of the plates that can be produced.

Other concepts exist for preparing carbonaceous flow field plates with improved overall properties for fuel cell stacks. For instance, a highly carbon filled, flow field section may be overmolded with thermoplastic sealing, porting and fluid distribution features thereon. However, the differences in thermal expansion, combined with the added space needed for good adhesion between the overmold and the flow field section, and the generally reduced temperature resistance of the overmolded thermoplastic limits the value of this concept.

A great deal of effort has gone into developing flow field plates with improved properties for the fuel cell industry. However, there remains a continuing need for additional improvement and particularly in automotive applications. This invention fulfills these needs and provides further related advantages.

The present invention provides carbonaceous flow field plates with overall improved properties for use in fuel cells. This is achieved by manufacturing the plates such that the active and inactive regions have different functional properties. Advantageously though, the materials employed in both regions can be the same in both composition and physical characteristics if desired. Such plates can be made via a modified compression mold method from the prior art involving a mold system comprising patterned molds and a powder material supply device with numerous supply openings. In the present invention, two different carbon particulate and polymer resin mixtures are employed and the two different mixtures are loaded into appropriate supply openings prior to compression in order to locate the mixtures where desired in the patterned mold pieces.

Specifically, a carbonaceous flow field plate is provided for a fuel cell in which the flow field plate comprises an active region comprising flow field channels and an inactive region. The active region of the plate comprises a first mixture of a first carbon particulate and a first polymer resin, while the inactive region comprises a second mixture of a second carbon particulate and a second polymer resin. In the present invention, the first mixture is different from the second mixture. By using different mixtures, a given property or properties in each region can be improved while perhaps sacrificing other properties of lesser or little importance in that region. Overall then, the functioning of the flow field plate can be improved.

Useful differences in the first and second mixtures include differences in the mass ratios of the components. For instance, the mass ratio of the first carbon particulate to the first polymer resin in the first mixture can be different from the mass ratio of the second carbon particulate to the second polymer resin in the second mixture, e.g. the mass ratio of the first carbon particulate to the first polymer resin may be in the range from 75:25 to 90:10 while the ratio of the second carbon particulate to the second polymer resin may be in the range from 25:75 to 60:40. Other useful differences which may be considered include differences in the types of carbon particulates employed (e.g. composition, particle size distribution, and/or shape), and/or differences in the types of polymer resins employed.

Alternatively, useful differences in the mixtures may be obtained via differences in processing the mixtures, including those associated with the mixing process per se and particularly with overmixing. For instance, overmixing gives better (i.e. lower) permeability but poorer electrical conductivity. Thus, otherwise similar mixtures compositionally may result in different properties in the product flow field plate based on processing differences. For instance, the permeability and the electrical conductivity of the active region can be made greater than the permeability and the electrical conductivity of the inactive region. Such a situation potentially allows for functionally acceptable, yet thinner flow field plates to be made than what is currently considered to be the minimum acceptable thickness for carbonaceous plates of this type.

Using one or more of the preceding approaches then, exemplary flow field plate embodiments of the invention can be made in which the through-plane electrical conductivity of the active region is greater than 40 S/cm and the through-plane electrical conductivity of the inactive region is less than 30 S/cm. Embodiments can also be made in which the permeability (e.g. in Darcys) of the active region is greater than that of the inactive region and/or in which the flowability of the first mixture in the active region is less than the flowability of the second mixture in the inactive region.

Flow field plates of the invention are particularly suitable for use in solid polymer electrolyte fuel cells and stacks thereof. Additional materials may optionally be used in manufacturing such plates (e.g. additional binders, fillers, etc.) if desired. But generally, additional materials are not required and thus the active and inactive regions of the plate may consist essentially of just the first and second mixtures respectively. Further, typically in such plates, the inactive region appears as a peripheral region of the flow field plate and the flow field plate is compression molded.

As mentioned, plates of the invention can be made using a modified method from the prior art. In one embodiment, the method comprises the steps of preparing the first mixture of the first carbon particulate and the first polymer resin, preparing the second mixture of the second carbon particulate and the second polymer resin, and obtaining a special mold system. This system comprises a patterned lower mold, a patterned upper mold, and a powder material supply device which in turn comprises a first material supplier which is provided with a plurality of supply openings in a downward direction for downwardly supplying powder material, a first slide plate provided at a lower portion of the first material supplier which is slidable between a closed location where all of the supply openings are closed and an open location where all the supply openings are opened, and a base for supporting the first material supplier and the first slide plate and which is provided with an engagement apparatus for accurately positioning the powder material supply device on the mold system. The method further comprises the steps of loading a first set of the plurality of supply openings corresponding to the active region with the first mixture with the first slide plate at the closed location, loading a second set of the plurality of supply openings corresponding to the inactive region with the second mixture with the first slide plate at the closed location, applying a flattening device over the surface of the first material supplier to remove excess first and second mixture over the first and second sets of the plurality of supply openings, setting the powder material supply device over the patterned lower mold, sliding the first slide plate to the open location thereby distributing the first and second mixtures onto the pattern of the lower mold, placing the patterned upper mold onto the lower mold, and compressing the upper mold onto the lower mold at elevated pressure and temperature thereby forming the flow field plate. As will be apparent to those skilled in the art, the ordering of the steps may be varied to some extent.

Alternatively, in another embodiment, the method comprises the steps of preparing the first mixture of the first carbon particulate and the first polymer resin, preparing the second mixture of the second carbon particulate and the second polymer resin, and obtaining an alternative special mold system. This system comprises a patterned lower mold, a patterned upper mold, and a powder material supply device which in turn comprises a first material supplier which is provided with a first set of a plurality of supply openings in a downward direction for downwardly supplying powder material, a first slide plate provided at a lower portion of the first material supplier which is slidable between a closed location where all of the supply openings are closed and an open location where all the supply openings are opened, a second material supplier which is provided with a second set of a plurality of supply openings in a downward direction for downwardly supplying powder material, a second slide plate provided at a lower portion of the second material supplier which is slidable between a closed location where all of the supply openings are closed and an open location where all the supply openings are opened, and a base for supporting the first material supplier, the first slide plate, the second material supplier, and the second slide plate and which is provided with an engagement apparatus for accurately positioning the powder material supply device on the mold system. The method further comprises the steps of loading the first set of a plurality of supply openings corresponding to the active region with the first mixture with the first slide plate at the closed location, applying a flattening device over the surface of the first material supplier to remove excess first mixture over the first set of a plurality of supply openings, setting the powder material supply device over the patterned lower mold, sliding the first slide plate to the open location thereby distributing the first mixture onto the pattern of the lower mold, loading the second set of a plurality of supply openings corresponding to the inactive region with the second mixture with the second slide plate at the closed location, applying a flattening device over the surface of the second material supplier to remove excess second mixture over the second set of a plurality of supply openings, setting the powder material supply device over the patterned lower mold, sliding the second slide plate to the open location thereby distributing the second mixture onto the pattern of the lower mold, placing the patterned upper mold onto the lower mold, and compressing the upper mold onto the lower mold at elevated pressure and temperature thereby forming the flow field plate. Again, as apparent to those skilled in the art, the ordering of the steps here may also be varied to some extent.

In all embodiments of the method, the first and second carbon particulates employed can be the same in both composition and physical characteristics and also the first and second polymer resins employed can also be the same in both composition and physical characteristics. Alternatively, the preparing of the first and second mixtures may comprise employing a different ratio of the first carbon particulate to the first polymer resin in the first mixture than is employed for the ratio of the second carbon particulate to the second polymer resin in the second mixture. Further still, in any embodiment of the method, the preparing of the first mixture may comprise applying a first mixing energy to the first mixture while the preparing of the second mixture may comprise applying a second mixing energy to the second mixture in which the first mixing energy is less than the second mixing energy.

These and other aspects of the invention are evident upon reference to the attached Figures and following detailed description.

Figure 1a shows a top view of the cathode side of an exemplary oxidant flow field plate for use in a solid polymer electrolyte fuel cell. In Figure 1a, the active and inactive regions comprising the two different mixtures are identified.

Figure 1b shows a cross-sectional view of the oxidant flow field plate of Figure 1 a along section A-A.

Figure 1c shows a cross-sectional view of the oxidant flow field plate of Figure 1a along section B-B.

Figures 2a through 2e schematically illustrate the various steps involved in making a flow field plate in accordance with an exemplary method of the invention.

"Carbonaceous" has its plain meaning, namely meaning consisting of or containing carbon. For instance, carbonaceous refers to objects that consist essentially only of carbon or that simply contain carbon such as carbon composites (e.g. a composite of carbon and plastic).

An active region 1a in a relevant flow field plate refers to a location that is immediately adjacent to an active electrode after having been assembled into a completed fuel cell. In a like manner, an inactive region 1b then refers to a location that is not immediately adjacent to an active electrode after having been assembled into a completed fuel cell. In both instances, the regions are considered as extending throughout the thickness direction of the flow field plate. Active regions 1a typically comprise flow field channels to distribute fluids to and from the electrodes while inactive regions 1a typically contain features for sealing, ports, and features for transitioning to channels or other features in the active region 1a.

Herein, the term flowability is used in reference to mixtures and compression molded mixtures of carbon particles and polymer resins and is similar in meaning to powder flowability which is the ease with which a powder flows under a specified set of conditions (e.g. Hausner ratio).

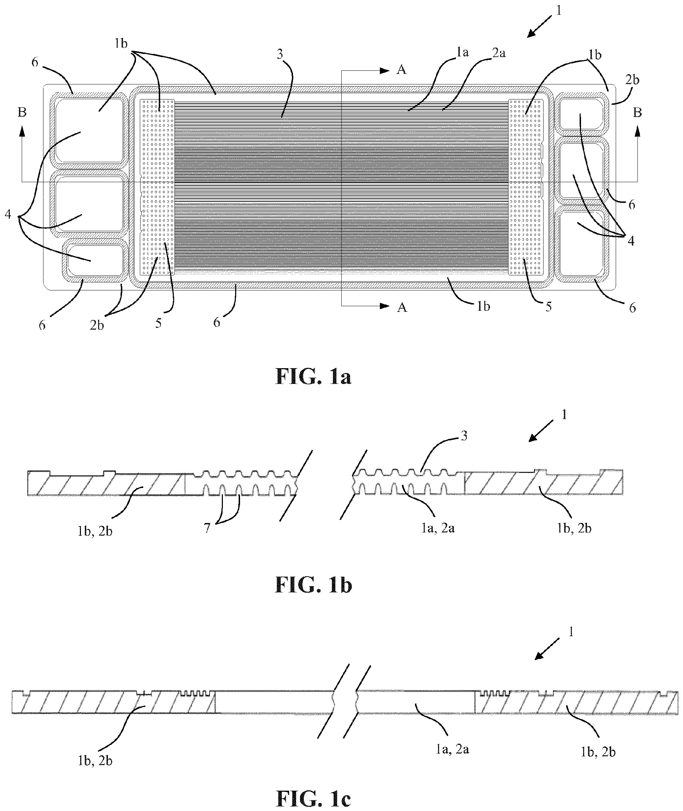

Solid polymer electrolyte fuel cell stacks can serve as useful power supplies for numerous applications and particularly for automotive purposes. They typically comprise a series stack of generally rectangular, planar solid polymer electrolyte fuel cells. Bipolar plate assemblies comprising bonded pairs of oxidant and fuel flow field plates with oxidant and fuel flow fields formed on opposite sides and with coolant flow fields formed therebetween are typically employed in such stacks. Figures 1a and 1b show an exemplary carbonaceous oxidant flow field plate for use in such a bipolar plate assembly for fuel cell stacks for automotive applications. Such carbonaceous flow field plates are typically made by embossing a suitable carbon web (e.g. expanded graphite) or by compression molding suitable mixtures of carbon particulate and polymer resin, the oxidant flow field plate in Figures 1a and 1b can be visually identical to a prior art plate, but as described in more detail below is a plate made in accordance with the invention.

Figure 1a shows a top view of the cathode side of oxidant flow field plate 1 and comprises active region 1a and inactive regions 1b. In Figure 1a, active region 1a is located centrally in plate 1 while inactive regions 1b are located peripherally around plate 1. Active region 1a comprises first mixture 2a of a first carbon particulate and a first polymer resin and inactive regions 1b comprise second mixture 2b of a second carbon particulate and a second polymer resin. Numerous conventional features are provided on flow field plate 1. For instance in Figure 1a, oxidant flow field plate 1 comprises an oxidant flow field defined by oxidant flow field channels 3, inlet and outlet manifold openings 4 for the fuel, oxidant, and coolant fluids, inlet and outlet oxidant transition regions 5, and seal grooves 6 for some of the numerous seals required to properly seal the fuel cell fluids from each other and the environment.

Figure 1b shows a cross-sectional view of the oxidant flow field plate of Figure 1 a along width-wise section line A-A (note: for illustrative purposes, the relative dimensions of features in this figure are not shown to scale). Visible now in Figure 1b are coolant flow field channels 7 which have been formed on the opposite side of plate 1 and which ultimately will define a coolant flow field when plate 1 is combined with, and bonded to, an appropriate fuel flow field plate to form a bipolar plate assembly. Active region 1a and inactive regions 1b extend through plate 1 and comprise first and second mixtures 2a, 2b respectively. In a like manner, Figure 1c shows a cross-sectional view of the oxidant flow field plate of Figure 1a along length-wise section line B-B (note: as in Fig. 1b, the relative dimensions of features in this figure are not shown to scale).

As a consequence of employing the two different mixtures 2a and 2b in the construction of carbonaceous oxidant flow field plate 1, improved overall properties for plate 1 can be obtained. The functional properties of active and inactive regions 1a, 1b can thus be tailored differently for greater improvement overall. While tailoring a given property for a better performance characteristic in one region can frequently involve sacrificing another performance characteristic, in many cases the sacrificed performance characteristic may not be of such importance in that region. In this way, certain sacrificed characteristics may be tolerated and thus overall the functioning of the flow field plate can be improved.

Mixtures 2a, 2b each comprise a carbon particulate and a polymer resin. Optionally, more than one type of carbon particulate and/or more than one type of polymer resin may be employed in the mixtures. Also optionally, the mixtures may contain other desirable materials to modify mechanical, electrical, or chemical properties (e.g. fillers, binders). In some embodiments of the invention, the types of carbon particulate and of polymer resins used in the two mixtures may be the same in both composition and physical characteristics. In such embodiments, the mixtures may instead differ in some manner as a result of differences in how they were processed.

For instance, in one embodiment, inactive regions 1b would comprise an overmixed mixture in which the exact composition and carbon particulate to resin ratio is the same as those in the active regions. Here, overmixing refers to applying a greater mixing energy to the mixture during processing than is normally considered acceptable. The reason this is usually not considered acceptable is that the resulting mixture is characterized by an undesirable reduction in electrical conductivity. On the other hand, the resulting mixture is characterized by a desirable increase in flowability. Desirably then, with overmixed mixture in the inactive regions, the thermal expansion of each region would be substantially identical, as would be their mechanical properties. Having greater flowability though, the overmixed mixture in the inactive regions would be better able to form suitable surfaces for sealing as well as impermeable thin carbonaceous webs, at the expense of electrical conductivity - which however is not required in these inactive regions. Further, this approach could allow for thinner plate thicknesses to be employed in the main fluid distribution regions and seal bridging regions, both of which often dictate the minimum thickness of the plate assemblies in current fuel cell designs. Adopting this approach to make thinner plates may result in an increase in permeability in the active regions, but the level of impermeability required in the active regions is generally not as high as that required in the inactive regions. In an alternative approach to the preceding, the carbon particulate to polymer resin ratio could be lowered slightly in the mixture intended for use in the inactive regions in order to obtain qualitatively similar results.

In general, useful differences between the two mixtures employed can be obtained by varying the mass ratios of the components. For instance, the mass ratio of the carbon particulate to the polymer resin in the active region mixture can be different from the mass ratios employed in the inactive regions, e.g. ranging from 75:25 to 90:10 in the former to from 25:75 to 60:40 in the latter. Other useful differences which may be considered include differences in the types of carbon particulates employed (e.g. composition, particle size distribution, and/or shape for better flowability), and/or differences in the types of polymer resins employed.

Using one or more of the preceding approaches then, exemplary flow field plate embodiments of the invention can be made in which the through-plane electrical conductivity of the active region is greater than 40 S/cm and the through-plane electrical conductivity of the inactive region is less than 30 S/cm. Embodiments can also be made in which the permeability (e.g. in Darcys) of the active region is greater than that of the inactive region and/or in which the flowability of the first mixture in the active region is less than the flowability of the second mixture in the inactive region.

Flow field plates of the invention can be made via a compression mold method similar to, but a modification of known methods. In this inventive method, two different carbon particulate and polymer resin mixtures are prepared and provided as discussed in the preceding. A mold system is used which comprises patterned molds and a powder material supply device with numerous supply openings. The two different mixtures are loaded into appropriate supply openings prior to compression in order to locate the mixtures where desired in the patterned mold pieces, and hence the final product flow field plate.

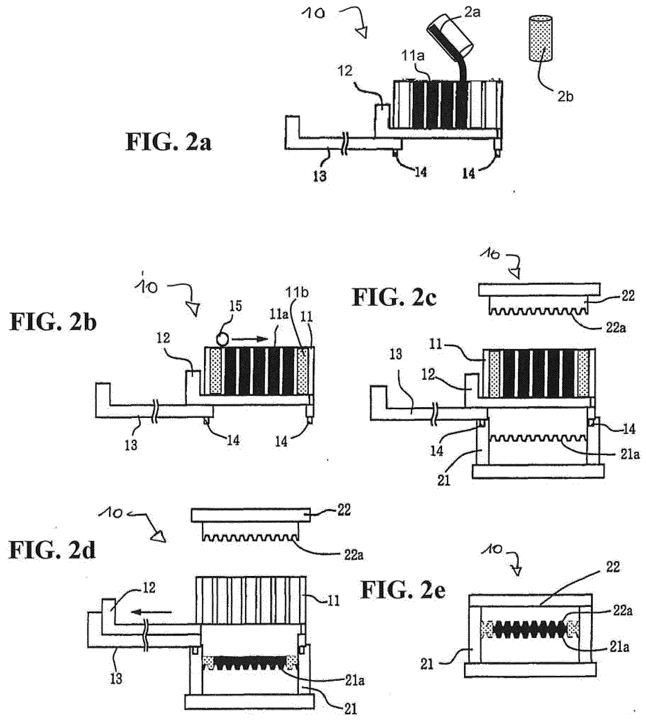

An exemplary method of manufacturing these carbonaceous flow field plates is illustrated in the series of schematics of Figures 2a through 2e.

Figure 2a shows a powder material supply device 10 to be used in a mold system for use in the exemplary method. Powder material supply device 10 comprises material supplier 11 which is provided with a plurality of supply openings 11a, 11 b in a downward direction for downwardly supplying powder material. Slide plate 13 is provided at a lower portion of material supplier 11 which is slidable between a closed location where all of supply openings 11a, 11 b are closed and an open location where all supply openings 11a, 11b are opened. Base 13 supports material supplier 11 and slide plate 12 and is provided with engagement apparatus 14 for accurately positioning powder material supply device 10 on the mold system.

In the exemplary method then, both a first mixture 2a of the first carbon particulate and the first polymer resin and a second mixture 2b of the second carbon particulate and the second polymer resin are prepared as disclosed in the preceding. Then, as shown in Figure 2a, with slide plate 12 at the closed location, first set 11 a of the plurality of supply openings 11a, 11b corresponding to the active region are loaded with the first mixture. And also, again with slide plate 12 at the closed location, second set 11b of the plurality of supply openings 11a, 11b corresponding to the inactive region are loaded with the second mixture. While Figure 2a shows one possible sequence of these loading steps, those skilled in the art will appreciate that an alternate sequence may be employed, including loading all of the plurality of supply openings 11a, 11b concurrently.

After appropriately loading supply openings 11a, 11b with mixtures, flattening device 15 is applied over the surface of material supplier 11 to remove excess first and second mixture over the plurality of supply openings 11a, 11b. This step is depicted in Figure 2b.

Powder material supply device 10 is now ready for use in a mold comprising lower mold 21 and upper mold 22. Lower and upper molds 21, 22 are suitably patterned with patterns 21a, 22a respectively in accordance with the desired features to be formed on the plate surfaces. In Figure 2c, powder material supply device 10 is shown set into place over patterned lower mold 21.

In Figure 2d, slide plate 12 is then slid to the open location thereby distributing the two mixtures onto pattern 21a of lower mold 21. Next, as shown in Figure 2e, patterned upper mold 22 is placed onto lower mold 21 and compressed at elevated pressure and temperature, thereby forming flow field plate 1.

Compared to prior art approaches that involve molding inactive region features in a thermoplastic around a metallic or carbonaceous flow field, the present invention would result in fewer issues with differential thermal expansion between the different materials. Further, by being molded into a single piece in one operation, there is a reduced need for the plate part volume or area dedicated to making a good bond between the different substrates.

In embodiments in which the polymer resin chemistry is the same throughout the flow field plate part, all the materials could be formed together during the molding process, and there would be no need to add space for overmolding regions. Thermal expansion differences could be minimized by keeping the compositions of the two mixtures involved suitably close, and the presence of the carbon materials could still add strength at temperature to thinner, high stress regions of the manufactured plates.

The present state of the art relating to carbonaceous flow field plates uses substantially homogenous material compositions throughout the plates, resulting in challenges meeting the impermeability requirements in thin sections in inactive regions in the plates. In inactive regions, the present invention may result in an increase of the design limits towards thinner plate sections and thereby to thinner plates.

While particular elements, embodiments and applications of the present invention have been shown and described, it will be understood, of course, that the invention is not limited thereto since modifications may be made by those skilled in the art without departing from the spirit and scope of the present disclosure, particularly in light of the foregoing teachings. Such modifications are to be considered within the purview and scope of the claims appended hereto.

## Claims

1. A carbonaceous flow field plate (1) for a fuel cell, the flow field plate (1) comprising an active region (1a) comprising flow field channels (3) and an inactive region (1b), wherein the active region (1a) of the plate comprises a first mixture of a first carbon particulate and a first polymer resin, and wherein the inactive region (1b) comprises a second mixture of a second carbon particulate and a second polymer resin; **characterized in that** the first mixture is different from the second mixture.

2. The flow field plate (1) according to claim 1 wherein the mass ratio of the first carbon particulate to the first polymer resin in the first mixture is different from the mass ratio of the second carbon particulate to the second polymer resin in the second mixture.

3. The flow field plate (1) according to claim 1 or 2 wherein the mass ratio of the first carbon particulate to the first polymer resin is in the range from 75:25 to 90:10 and the ratio of the second carbon particulate to the second polymer resin is in the range from 25:75 to 60:40.

4. The flow field plate (1) according to one of the claims 1 to 3 wherein the permeability of the active region (1a) comprising the first mixture is greater than the permeability of the inactive region (1b) comprising the second mixture.

5. The flow field plate (1) according to one of the claims 1 to 4 wherein the particle size distribution of the first carbon particulate is different from the particle size distribution of the second carbon particulate.

6. The flow field plate (1) according to one of the claims 1 to 5 wherein the electrical conductivity of the active region (1a) is greater than the electrical conductivity of the inactive region (1b).

7. The flow field plate (1) according to claim 6 wherein the through-plane electrical conductivity of the active region (1a) is greater than 40 S/cm and the through-plane electrical conductivity of the inactive region (1b) is less than 30 S/cm.

8. The flow field plate (1) according to one of the claims 1 to 7 wherein the flowability of the first mixture in the active region (1a) is less than the flowability of the second mixture in the inactive (1b) region.

9. The flow field plate (1) according to one of the claims 1 to 8 wherein the active region (1a) of the plate consists essentially of the first mixture and wherein the inactive region (1b) consists essentially of the second mixture and wherein the inactive region (1b) preferably is a peripheral region of the flow field plate.

10. A fuel cell comprising the flow field plate according to one of the claims 1 to 9 wherein the fuel cell preferably is a solid polymer electrolyte fuel cell.

11. A method of manufacturing the carbonaceous flow field plate (1) according to one of the claims 1 to 9 comprising:
preparing the first mixture of the first carbon particulate and the first polymer resin;
preparing the second mixture of the second carbon particulate and the second polymer resin;
obtaining a mold system comprising:
a patterned lower mold (21);
a patterned upper mold (22); and
a powder material supply device (10) comprising:
a first material supplier (11) which is provided with a plurality of supply openings (11a, 11b) in a downward direction for downwardly supplying powder material;
a first slide plate (12) provided at a lower portion of the first material supplier (11) which is slidable between a closed location where all of the supply openings (11a, 11b) are closed and an open location where all the supply openings (11a, 11b) are opened; and
a base (13) for supporting the first material supplier (11) and the first slide plate (12) and which is provided with an engagement apparatus (14) for accurately positioning the powder material supply device (10) on the mold system; and/or
with the first slide plate (12) at the closed location, loading a first set of the plurality of supply openings (11a, 11b) corresponding to the active region (1a) with the first mixture;
preferably with the first slide plate (12) at the closed location, loading a second set of the plurality of supply openings (11a, 11b) corresponding to the inactive region (1b) with the second mixture;
applying a flattening device over the surface of the first material supplier (11) to remove excess first and second mixture over the first and second sets of the plurality of supply openings (11a, 11b);
setting the powder material supply device (10) over the patterned lower mold;
sliding the first slide plate (12) to the open location thereby distributing the first and second mixtures onto the pattern of the lower mold (21);
placing the patterned upper mold (22) onto the lower mold; and
compressing the upper mold (22) onto the lower mold (21) at elevated pressure and temperature thereby forming the flow field plate.

12. A method of manufacturing the carbonaceous flow field plate (1) according to one of the claims 1 to 9 comprising:
preparing the first mixture of the first carbon particulate and the first polymer resin;
preparing the second mixture of the second carbon particulate and the second polymer resin;
obtaining a mold system comprising:
a patterned lower mold (21);
a patterned upper mold (22); and
a powder material supply device (10) comprising:
a first material supplier (11) which is provided with a first set of a plurality of supply openings (11 a, 11b) in a downward direction for downwardly supplying powder material;
a first slide plate (12) provided at a lower portion of the first material supplier (11) which is slidable between a closed location where all of the supply openings (11a, 11b) are closed and an open location where all the supply openings (11a, 11b) are opened;
a second material supplier (11) which is provided with a second set of a plurality of supply openings (11a, 11b) in a downward direction for downwardly supplying powder material;
a second slide plate (12) provided at a lower portion of the second material supplier (11) which is slidable between a closed location where all of the supply openings (11a, 11b) are closed and an open location where all the supply openings (11a, 11b) are opened; and
a base for supporting the first material supplier, the first slide plate (12), the second material supplier, and the second slide plate (12) and which is provided with an engagement apparatus (14) for accurately positioning the powder material supply device (10) on
the mold system;
with the first slide plate (12) at the closed location, loading the first set of a plurality of supply openings (11a, 11b) corresponding to the active region (1a) with the first mixture;
applying a flattening device over the surface of the first material supplier (11) to remove excess first mixture over the first set of a plurality of supply openings (11a, 11b);
setting the powder material supply device (10) over the patterned lower mold (21);
sliding the first slide plate (12) to the open location thereby distributing the first mixture onto the pattern (21a) of the lower mold (21);
with the second slide plate (12) at the closed location, loading the second set of a plurality of supply openings (11a, 11b) corresponding to the inactive region (1b) with the second mixture;
applying a flattening device over the surface of the second material supplier (11) to remove excess second mixture over the second set of a plurality of supply openings (11a, 11b);
setting the powder material supply device (10) over the patterned lower mold (21);
sliding the second slide plate (12) to the open location thereby distributing the second mixture onto the pattern (21a) of the lower mold (21);
placing the patterned upper mold (22) onto the lower mold (21); and
compressing the upper mold (22) onto the lower mold (21) at elevated pressure and temperature thereby forming the flow field plate.

13. The method of claim 11 wherein the first and second carbon particulates are the same in both composition and physical characteristics and wherein the first and second polymer resins are the same in both composition and physical characteristics.

14. The method of claim 13 wherein the preparing of the first and second mixtures comprises employing a different ratio of the first carbon particulate to the first polymer resin in the first mixture than is employed for the ratio of the second carbon particulate to the second polymer resin in the second mixture.

15. The method of claim 13 wherein:
the preparing of the first mixture comprises applying a first mixing energy to the first mixture;
the preparing of the second mixture comprises applying a second mixing energy to the second mixture; and
the first mixing energy is less than the second mixing energy.
